# EUROPÄISCHE PATENTANMELDUNG

(11) **EP 2 916 407 A1**
(43) Veröffentlichungstag der Anmeldung: **09.09.2015**
(21) Anmeldenummer: 14305321.3
(22) Anmeldetag: 06.03.2014
(51) Int. Cl.: H02G 1/08, H02G 1/10, H02G 9/12

(54) **Verfahren zum zugfesten Abschließen des Endes eines Energiekabels und damit hergestellte Vorrichtung**

(71) Anmelder: Nexans, 75008 Paris (FR)
(72) Erfinder: Aue, Volker, 44137 Dortmund (DE); Schramm, Eduard, 30177 Hannover (DE)
(74) Vertreter: Feray, Valérie

(57) **Zusammenfassung**

Es wird ein Verfahren zum zugfesten Abschließen des Endes eines Energiekabels (4) angegeben, für welches ein Energiekabel (4) verwendet wird, dessen elektrische Übertragungselemente enthaltende Seele (5) von einer zugfesten, aus Metalldrähten bestehenden Bewehrung (6) umgeben ist. Zunächst wird die Bewehrung (6) am Ende des Energiekabels (4) auf einer vorgegebenen Länge entfernt. Danach wird auf das Ende der verbliebenen Bewehrung (6) ein dieselbe dicht umgebendes Rohrstück (7) aus Metall aufgebracht und zugfest mit derselben verbunden. Abschließend wird eine topfartige, rohrförmig langgestreckte Hülse (9) aus Metall auf das Ende des Energiekabels (4) aufgeschoben und zugfest mit dem Rohrstück (7) verbunden, die an ihrem freien, vom Rohrstück (7) wegweisenden Ende eine zum Anbringen eines Zugelements geeignete Einrichtung hat. Es wird außerdem eine mit dem Verfahren hergestellte Vorrichtung angegeben.

## Beschreibung

Die Erfindung bezieht sich auf ein Verfahren, mit dem das Ende eines Energiekabels zugfest abgeschlossen werden kann sowie auf eine mit dem Verfahren hergestellte Vorrichtung.

Elektrische Kabel aller Art werden dann mit entsprechenden zugfesten Vorrichtungen abgeschlossen, wenn sie beispielsweise zu ihrer Verlegung im Erdreich oder in Kabelkanälen mittels eines Zugelements gezogen werden sollen. Solche Vorrichtungen sind seit Jahren in unterschiedlichen Ausführungsformen bekannt. Sie werden beispielsweise als "Zuganker" bezeichnet. Derartige Zuganker sehen in Abhängigkeit von der Art und Größe der Kabel, an denen sie angebracht werden sollen, unterschiedlich aus. Sie werden nach Beendigung des Ziehvorgangs wieder von dem jeweiligen Kabel abgenommen, das dann für eine elektrische Verbindung mit weiterführenden Geräten zur Verfügung steht.

Eine solche Vorgehensweise gilt grundsätzlich auch dann, wenn das Kabelende in der Montageposition in einer vorgegebenen Lage festgelegt werden soll. Das ist beispielsweise bei Windkraftanlagen der Fall, die im Offshore-Gebiet im Meer stehen. Solche Anlagen haben in einer Höhe von beispielsweise 20 m bis 50 m über dem Meeresboden eine Plattform, bis zu der ein Energiekabel verlegt und an der dasselbe gleichzeitig festgelegt werden soll. Ein entsprechendes Verlegeverfahren geht beispielsweise aus der EP 2 696 123 A1 hervor. Das Kabel wird bei diesem bekannten Verfahren am Verlegeort an seinem Ende mit einem Ziehstrumpf versehen und mittels eines an demselben angreifenden Zugelements durch ein vormontiertes Rohr bis zu einer Plattform einer Windkraftanlage gezogen, auf welcher es mittels des Ziehstrumpfs festgelegt wird.

Das Verfahren nach der Erfindung und die mit demselben am Ende eines Energiekabels angebrachte Vorrichtung beziehen sich auf den Anschluß von Energiekabeln an in einem Offshore-Gebiet aufgestellte Windkraftanlagen. Solche Anlagen haben Pfeiler oder Fundamente mit einer Plattform, auf welcher beispielsweise Transformatoren oder Schaltanlagen angeordnet sind.

Der Erfindung liegt die Aufgabe zugrunde, ein Verfahren mit zugehöriger Vorrichtung anzugeben, mit dem ein Energiekabel derart abgeschlossen werden kann, daß es ohne wesentlichen zusätzlichen Montageaufwand an einem am Montageort vorhandenen Träger befestigt werden kann.

Diese Aufgabe wird gemäß der Erfindung dadurch gelöst,
- daß ein Energiekabel verwendet wird, dessen elektrische Übertragungselemente enthaltende Seele von einer zugfesten, aus Metalldrähten bestehenden Bewehrung umgeben ist,
- daß zunächst die Bewehrung am Ende des Energiekabels auf einer vorgegebenen Länge entfernt wird,
- daß danach auf das Ende der verbliebenen Bewehrung ein dieselbe dicht umgebendes Rohrstück aus Metall aufgebracht und zugfest mit derselben verbunden wird und
- daß abschließend eine topfartige, rohrförmig langgestreckte Hülse aus Metall auf das Ende des Energiekabels aufgeschoben und zugfest mit dem Rohrstück verbunden wird, die an ihrem freien, vom Rohrstück wegweisenden Ende eine zum Anbringen eines Zugelements geeignete Einrichtung hat.

Mit diesem Verfahren wird das Ende eines Energiekabels - im folgenden kurz "Kabel" genannt - auf einfache aber wirkungsvolle Art und Weise bereits im Herstellerwerk derart zugfest abgeschlossen und damit konfektioniert, daß es am Verlegeort bzw. Montageort ohne zusätzlichen Montageaufwand verlegt und an einem Träger befestigt werden kann. Das Kabel kann fertig konfektioniert beispielsweise auf einer Spule zum Montageort transportiert und dort nicht nur horizontal, sondern insbesondere auch vertikal verlegt werden. Das mit diesem Verfahren abgeschlossene Kabel kann dadurch mit Vorteil bis zu einer in einer Höhe von beispielsweise etwa 20 m bis 50 m über dem Meeresboden befindlichen Plattform einer Windkraftanlage hochgezogen und an derselben mit Befestigungselementen festgelegt werden, die an dem am Kabelende verbleibenden Rohrstück angreifen. Das Rohrstück kann dazu mit Vorteil mit Teilen einer Befestigungsvorrichtung ausgerüstet sein, in welche korrespondierende Teile der Befestigungsvorrichtung eingreifen können, die an der Plattform angebracht sind. Das Festlegen des Endes des Kabels an der Plattform ist dadurch besonders einfach. Es kann ohne wesentlichen zusätzlichen Montageaufwand im gleichen Arbeitsgang nach dem Hochziehen des Kabels durchgeführt werden.

Für den elektrischen Anschluß des Kabels an ein auf der Plattform befindliches Gerät, bei dem es sich - wie schon erwähnt - um einen Transformator oder eine Schaltanlage handeln kann, braucht nach Festlegung des Kabelendes nur noch die Hülse von dem Rohrstück abgenommen zu werden. Die Übertragungselemente des Kabels liegen dann zur Bearbeitung frei.

Das Verfahren nach der Erfindung und die mit demselben hergestellte Vorrichtung werden anhand der Zeichnungen in Ausführungsbeispielen erläutert.

Es zeigen:
Fig. 1 schematisch das untere Ende eines Fundaments einer Windkraftanlage.
Fig. 2 eine mit dem Verfahren nach der Erfindung hergestellte Vorrichtung.
Fig. 3 eine gegenüber Fig. 2 abgewandelte Ausführungsform der Vorrichtung.
Fig. 4 schematisch das an einem Fundament festgelegte Ende eines Kabels.

Das Verfahren nach der Erfindung ist - wie schon erwähnt - insbesondere zum Festlegen eines als Unterwasserkabel ausgeführten Energiekabels an einer Plattform einer auf dem Meeresboden aufgestellten Windkraftanlage bestimmt. Das Energiekabel - im folgenden weiter kurz als "Kabel" bezeichnet - hat mit Vorteil drei miteinander verseilte Starkstromkabel, welche gemeinsam, gegebenenfalls zusammen mit weiteren Übertragungselementen, die Seele des Kabels bilden.

Mit 1 ist der untere Teil eines Fundaments einer Windkraftanlage bezeichnet, das auf einem Meeresboden 2 - im sogenannten "Offshore-Gebiet" - aufgestellt ist. Das Fundament 1 hat eine Plattform 3, die sich beispielsweise etwa 30 m über dem Meeresboden 2 befindet. Auf der Plattform 3 können ein Transformator und/oder eine Schaltanlage sowie auch andere elektrische Geräte angeordnet sein, welche nicht mit dargestellt sind. Sie sind insbesondere elektrisch mit einem an der Spitze des Fundaments 1 angebrachten Generator verbunden.

Durch die Plattform 3 ragt das Ende eines Kabels 4 hindurch, das auf dem Meeresboden 2 aufliegt und bis zur Plattform 3 hochgezogen ist. Das Kabel 4 kann mit seinem freien Ende beispielsweise bis zu einer anderen Windkraftanlage oder einer Transformatorstation führen.

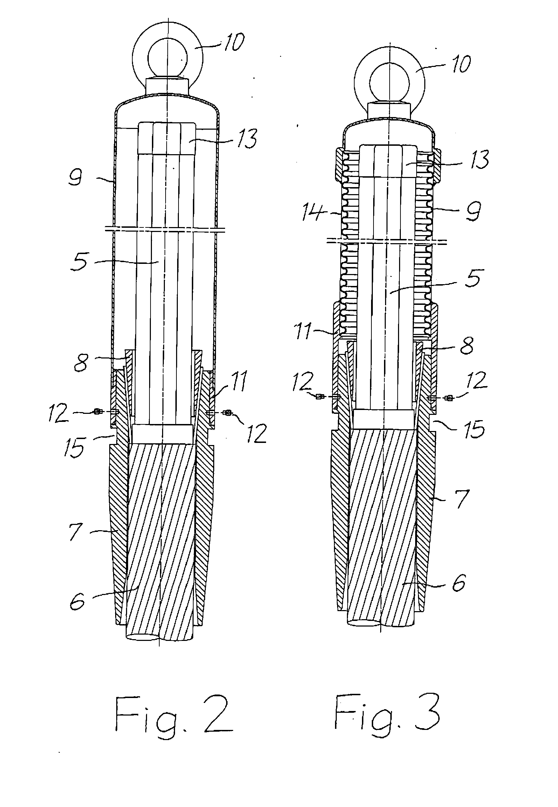

Die Seele 5 des Kabels 4 ist gemäß Fig. 2 von einer aus Metalldrähten bestehenden, zugfesten Bewehrung 6 umgeben. Die Metalldrähte bestehen mit Vorteil aus verzinktem Stahl. Sie können als Rund- oder Flachdrähte ausgeführt sein und sind als Umseilung um die Seele 5 herumgelegt.

Die Bewehrung 6 ist am Ende des Kabels 4 auf einer vorgegebenen Länge entfernt, so daß dessen Seele 5 auf dieser Länge freiliegt. Auf das Ende der im Kabel 4 verbliebenen Bewehrung 6 ist ein aus Metall, vorzugsweise aus Edelstahl, bestehendes Rohrstück 7 aufgeschoben, das dicht an der Bewehrung 6 anliegt.

Die Seele 5 ist im dargestellten Ausführungsbeispiel außerdem von einem Klemmring 8 aus Metall umgeben, auf dem die Metalldrähte der Bewehrung 6 aufliegen. Sie liegen in Montageposition zwischen dem Klemmring 8 und dem Rohrstück 7 und sind dadurch zwischen diesen beiden Teilen eingeklemmt.

Über dem Ende der Seele 5 des Kabels 4 ist eine aus Metall, vorzugsweise aus Edelstahl, bestehende, topfartige und rohrförmig langgetreckte Hülse 9 angeordnet, welche bis über das Rohrstück 7 ragt. Sie hat an ihrem freien Ende eine zum Anbringen eines Zugelements geeignete Einrichtung, die im dargestellten Ausführungsbeispiel als Zugöse 10 ausgeführt ist. Die Hülse 9 hat mit Vorteil an ihrem offenen Ende einen fest mit derselben verbundenen Ring 11, der in Montageposition das Ende des Rohrstücks 7 umgibt. Zur zugfesten Verbindung von Ring 11 und Rohrstück 7 können mindestens drei Schrauben 12 eingesetzt werden, welche über den Umfang des Rings 11 verteilt, denselben durchdringen und bis in das Rohrstück 7 ragen. Der Ring 11 kann dazu eine entsprechende Anzahl von Gewindebohrungen aufweisen und das Rohrstück 7 kann in Höhe dieser Gewindebohrungen entweder Löcher oder mit Vorteil eine umlaufende Nut haben.

Der Ring 11 kann auch mit einem Innengewinde versehen sein, das in Montageposition in ein auf dem Rohrstück 7 angebrachtes Außengewinde greift. Als zusätzliche Sicherung der relativen Position von Hülse 9 und Rohrstück 7 zueinander können auch dann die Schrauben 12 angebracht werden. In beiden Versionen sind Hülse 9 und Rohrstück 7 fest miteinander verbunden. Das Ende der Seele 5 kann durch eine Kappe 13 abgedeckt sein.

Im Montagezustand sind bei der Ausführungsform der Vorrichtung nach Fig. 2 die Metalldrähte der Bewehrung 6 zwischen dem Rohrstück 7 und dem Klemmring 8 eingeklemmt, die dazu mit Vorteil miteinander korrespondierende, konische Anlageflächen haben. Damit ist eine zugfeste Verbindung zwischen dem Rohrstück 7 und der Bewehrung 6 realisiert. Das Kabel 4 kann daher durch ein am Rohrstück 7 angreifendes Zugelement in seiner Längsrichtung gezogen werden. Eine entsprechend zugfeste Verbindung könnte auch dadurch geschaffen werden, daß das Rohrstück 7 und die Metalldrähte der Bewehrung 6 miteinander verschweißt werden. Der Klemmring 8 wird bei dieser Variante nicht benötigt. Es istjedoch auch möglich, bei Einsatz des Klemmrings 8 im geschilderten Sinne zusätzlich die Metalldrähte der Bewehrung 6 mit dem Rohrstück 7 und/oder mit dem Klemmring 8 zu verschweißen.

Grundsätzlich der gleiche Aufbau der Vorrichtung, wie er für Fig. 2 geschildert ist, gilt auch für Fig. 3. Während aber die Hülse 9 bei der Vorrichtung nach Fig. 2 als Glattrohr ausgeführt ist, ist bei der Ausführungsform nach Fig. 3 ein quer zu seiner Längsrichtung gewelltes Rohr als Hülse 9 eingesetzt. Die Hülse 9 wird dadurch gut biegbar. Diese Ausführungsform der Vorrichtung ist dann von Vorteil, wenn die Bewehrung 6 auf einer größeren Länge vom Ende des Kabels 1 entfernt wird. Das unter Einsatz eines gewellten Rohres als Hülse 9 konfektionierte Ende des Kabels 4 kann dadurch beim Aufwickeln desselben auf eine Spule mit "aufgewickelt" werden, so daß es nicht über das Profil der Spule hinausragt. Zur Stabilisierung des gewellten Rohres der Hülse 9 kann um dasselbe herum mit Vorteil eine zugfeste Schicht 14 angebracht sein, die beispielsweise als Geflecht aus Metalldrähten ausgeführt ist, die mit Vorteil aus Edelstahl bestehen.

Das Rohrstück 7 hat in bevorzugter Ausführungsform an seiner Außenfläche Teile einer Befestigungseinrichtung, deren komplementäre Teile an der Plattform 3 angebracht sind. Als Teil einer solchen Befestigungsvorrichtung ist im Rohrstück 7 beispielweise mindestens eine umlaufende Nut 15 mit vorzugsweise rechteckigem Querschnitt angebracht. Ein derartiges Teil einer Befestigungsvorrichtung hat den Vorteil, daß es nicht über das Profil des Rohrstücks 7 hinausragt und damit beim Verlegen des Kabels 4 nicht als sperriges Teil stört.

Das Verfahren nach der Erfindung wird zur Herstellung einer Vorrichtung nach Fig. 2 beispielsweise wie folgt durchgeführt:

Die Bewehrung 6 des Kabels 4 wird, gegebenenfalls einschließlich von dieselbe umgebenden Schichten, auf einer vorgegebenen Länge vom Kabelende entfernt. Die Kappe 13 wird auf die Seele 5 des Kabels 4 aufgesetzt. Das Rohrstück 7 wird auf das Kabelende so weit aufgeschoben, bis es die Metalldrähte der verbliebenen Bewehrung 6 dicht anliegend umgibt. Der mit einer konischen Außenfläche versehene Klemmring 8 wird so weit auf das Kabelende aufgeschoben, bis er unter die Metalldrähte der Bewehrung 6 greift und deren Enden bis zur Anlage an der konisch ausgeführten Innenfläche des Rohrstücks 7 drückt. Dabei wird auf den Klemmring 8 ein solcher in Achsrichtung wirkender Druck ausgeübt, daß die Metalldrähte der Bewehrung 6 zugfest eingeklemmt sind. Die Metalldrähte der Bewehrung 6 können zusätzlich mit dem Rohrstück 7 und/oder dem Klemmring 8 verschweißt werden.

Auf das so vorbereitete Kabelende wird danach in einer möglichen Ausführungsform die Hülse 9 aufgesteckt und mittels des Rings 11 mit dem Rohrstück 7 verbunden. Diese Position wird durch mindestens drei Schrauben 12 - es sind zwei Schrauben 12 eingezeichnet - gesichert, welche den Ring 11 durchdringen und bis in das Rohrstück 7 hineinragen. Das Ende des Kabels 4 ist danach fertig konfektioniert.

Das geschilderte Verfahren kann an einem bereits auf eine Spule aufgewickelten Kabel durchgeführt werden. Das Kabel kann aber auch erst nach Fertigstellung der zugfesten Vorrichtung auf eine Spule aufgewickelt werden.

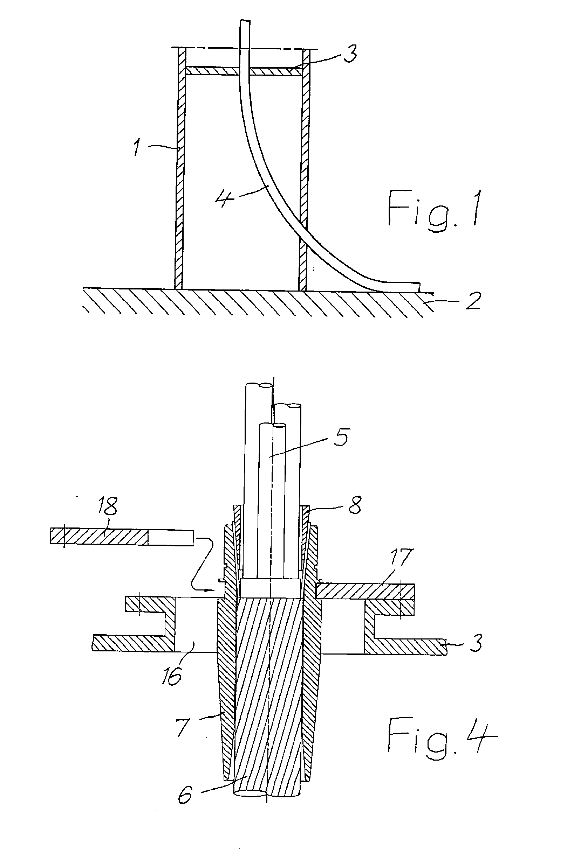

Das Kabel 4 wird im geschilderten Sinne bis zur Plattform 3 einer Windkraftanlage hochgezogen und durch eine in Fig. 4 schematisch angedeutete Öffnung 16 derselben hindurchgezogen. Das Kabelende kann dann über das Rohrstück 7 in der in den Zeichnungen dargestellten Ausführungsform mit Vorteil mittels eines aus zwei Teilen 17 und 18 bestehenden Halteflansches an der Plattform 3 festgelegt werden, welche in Montageposition in die Nut 15 des Rohrstücks 7 eingreifen. Die Teile 17 und 18 des Halteflansches sind fest mit der Plattform 3 zu verbinden. Die Hülse 9 kann dann vom Kabel 4 abgenommen werden, so daß dessen Seele 5, die gemäß Fig. 4 aus drei Starkstromkabeln bestehen kann, für einen elektrischen Anschluß an entsprechende Geräte zur Verfügung stehen.

## Patentansprüche

1. Verfahren zum zugfesten Abschließen des Endes eines Energiekabels, **dadurch gekennzeichnet, daß**
- daß ein Energiekabel (4) verwendet wird, dessen elektrische Übertragungselemente enthaltende Seele (5) von einer zugfesten, aus Metalldrähten bestehenden Bewehrung (6) umgeben ist,
- daß zunächst die Bewehrung (6) am Ende des Energiekabels (4) auf einer vorgegebenen Länge entfernt wird,
- daß danach auf das Ende der verbliebenen Bewehrung (6) ein dieselbe dicht umgebendes Rohrstück (7) aus Metall aufgebracht und zugfest mit derselben verbunden wird und
- daß abschließend eine topfartige, rohrförmig langgestreckte Hülse (9) aus Metall auf das Ende des Energiekabels (4) aufgeschoben und zugfest mit dem Rohrstück (7) verbunden wird, die an ihrem freien, vom Rohrstück (7) wegweisenden Ende eine zum Anbringen eines Zugelements geeignete Einrichtung hat.

2. Verfahren nach Anspruch 1, **dadurch gekennzeichnet, daß** das Rohrstück (7) und die Bewehrung (6) miteinander verschweißt werden.

3. Verfahren nach Anspruch 1, **dadurch gekennzeichnet, daß** unter das Ende der verbliebenen Bewehrung (6) ein Klemmring (8) auf die Seele (5) des Energiekabels (4) aufgeschoben wird, durch welchen die Metalldrähte der Bewehrung (6) mit zugfester Verbindung gegen das Rohrstück (7) gedrückt werden.

4. Verfahren nach Anspruch 3, **dadurch gekennzeichnet, daß** die Metalldrähte der Bewehrung (6) sowohl mit dem Rohrstück (7) als auch mit dem Klemmring (8) verschweißt werden.

5. Verfahren nach einem der Ansprüche 1 bis 4, **dadurch gekennzeichnet, daß** die Hülse (9) und das Rohrstück (7) durch Schrauben (12) miteinander verbunden werden, welche die Hülse (9) bzw. einen fest an derselben angebrachten Ring (11) durchdringen und in das Rohrstück (7) hineinragen.

6. Verfahren nach einem der Ansprüche 1 bis 4, **dadurch gekennzeichnet, daß** die an ihrem offenen Ende mit einem Innengewinde versehene Hülse (9) auf das mit einem Außengewinde versehene Rohrstück (7) aufgeschraubt wird.

7. Mit dem Verfahren nach Anspruch 1 hergestellte, am Ende eines mit einer Bewehrung versehenen Energiekabels angebrachte Vorrichtung, **dadurch gekennzeichnet, daß** mit einem die Bewehrung (6) des Energiekabels (4) umgebenden und zugfest mit derselben verbundenen Rohrstück (7) aus Metall eine das Ende des Energiekabels (4) umgebende Hülse (9) aus Metall zugfest verbunden ist, die an ihrem freien Ende eine Einrichtung zum Anbringen eines Zugelements hat.

8. Vorrichtung nach Anspruch 7, **dadurch gekennzeichnet,**
- **daß** die Hülse (9) an ihrem Befestigungsende ein Innengewinde und das Rohrstück (7) an seinem Befestigungsende ein Außengewinde aufweisen und
- **daß** Hülse (9) und Rohrstück (7) mittels ihrer Gewinde in Montageposition miteinander verschraubt sind.

9. Vorrichtung nach Anspruch 7 oder 8, **dadurch gekennzeichnet, daß** am freien Ende der Hülse (9) eine Zugöse (10) angebracht ist.

10. Vorrichtung nach Anspruch 7 oder 8, **dadurch gekennzeichnet, daß** außen an dem Rohrstück (7) Teile einer Befestigungseinrichtung zur Festlegung desselben an einer feststehenden Anlage angebracht sind.

11. Vorrichtung nach Anspruch 10, **dadurch gekennzeichnet, daß** außen in dem Rohrstück (7) mindestens eine umlaufende Nut (15) mit rechteckigem Querschnitt angebracht ist.

12. Vorrichtung nach Anspruch 7, **dadurch gekennzeichnet, daß** die Hülse (9) als Glattrohr ausgebildet ist.

13. Vorrichtung nach Anspruch 7, **dadurch gekennzeichnet, daß** die Hülse (9) als quer zu seiner Längsrichtung gewelltes Rohr ausgebildet ist, das außen von einer zugfesten Schicht (13) umgeben ist.

14. Vorrichtung nach Anspruch 13, **dadurch gekennzeichnet, daß** die zugfeste Schicht (13) ein Geflecht aus Metalldrähten ist.

15. Verwendung eines mit dem Verfahren nach Anspruch 1 konfektionierten Energiekabels als Offshore-Kabel bzw. Unterwasserkabel zum Anschließen an ein auf einer Plattform einer Windkraftanlage befindliches elektrisches Gerät.

## Geänderte Patentansprüche

### Geänderte Patentansprüche gemäss Regel 137(2) EPÜ.

1. Verfahren zum zugfesten Abschließen des Endes eines Energiekabels, in welchem ein Energiekabel (4) verwendet wird, dessen elektrische Übertragungselemente enthaltende Seele (5) von einer zugfesten, aus Metalldrähten bestehenden Bewehrung (6) umgeben ist, **dadurch gekennzeichnet,**
- **daß** zunächst die Bewehrung (6) am Ende des Energiekabels (4) auf einer vorgegebenen Länge entfernt wird,
- **daß** danach auf das Ende der verbliebenen Bewehrung (6) ein dieselbe dicht umgebendes Rohrstück (7) aus Metall aufgebracht und zugfest mit derselben verbunden wird und
- **daß** abschließend eine topfartige, rohrförmig langgestreckte Hülse (9) aus Metall auf das Ende des Energiekabels (4) aufgeschoben und zugfest mit dem Rohrstück (7) verbunden wird, die an ihrem freien, vom Rohrstück (7) wegweisenden Ende eine zum Anbringen eines Zugelements geeignete Einrichtung hat.

2. Verfahren nach Anspruch 1, **dadurch gekennzeichnet, daß** das Rohrstück (7) und die Bewehrung (6) miteinander verschweißt werden.

3. Verfahren nach Anspruch 1, **dadurch gekennzeichnet, daß** unter das Ende der verbliebenen Bewehrung (6) ein Klemmring (8) auf die Seele (5) des Energiekabels (4) aufgeschoben wird, durch welchen die Metalldrähte der Bewehrung (6) mit zugfester Verbindung gegen das Rohrstück (7) gedrückt werden.

4. Verfahren nach Anspruch 3, **dadurch gekennzeichnet, daß** die Metalldrähte der Bewehrung (6) sowohl mit dem Rohrstück (7) als auch mit dem Klemmring (8) verschweißt werden.

5. Verfahren nach einem der Ansprüche 1 bis 4, **dadurch gekennzeichnet, daß** die Hülse (9) und das Rohrstück (7) durch Schrauben (12) miteinander verbunden werden, welche die Hülse (9) bzw. einen fest an derselben angebrachten Ring (11) durchdringen und in das Rohrstück (7) hineinragen.

6. Verfahren nach einem der Ansprüche 1 bis 4, **dadurch gekennzeichnet, daß** die an ihrem offenen Ende mit einem Innengewinde versehene Hülse (9) auf das mit einem Außengewinde versehene Rohrstück (7) aufgeschraubt wird.

7. Mit dem Verfahren nach Anspruch 1 hergestellte, am Ende eines mit einer Bewehrung versehenen Energiekabels angebrachte Vorrichtung, **dadurch gekennzeichnet, daß** mit einem die Bewehrung (6) des Energiekabels (4) umgebenden und zugfest mit derselben verbundenen Rohrstück (7) aus Metall eine das Ende des Energiekabels (4) umgebende Hülse (9) aus Metall zugfest verbunden ist, die an ihrem freien Ende eine Einrichtung zum Anbringen eines Zugelements hat.

8. Vorrichtung nach Anspruch 7, **dadurch gekennzeichnet,**
- **daß** die Hülse (9) an ihrem Befestigungsende ein Innengewinde und das Rohrstück (7) an seinem Befestigungsende ein Außengewinde aufweisen und
- **daß** Hülse (9) und Rohrstück (7) mittels ihrer Gewinde in Montageposition miteinander verschraubt sind.

9. Vorrichtung nach Anspruch 7 oder 8, **dadurch gekennzeichnet, daß** am freien Ende der Hülse (9) eine Zugöse (10) angebracht ist.

10. Vorrichtung nach Anspruch 7 oder 8, **dadurch gekennzeichnet, daß** außen an dem Rohrstück (7) Teile einer Befestigungseinrichtung zur Festlegung desselben an einer feststehenden Anlage angebracht sind.

11. Vorrichtung nach Anspruch 10, **dadurch gekennzeichnet, daß** außen in dem Rohrstück (7) mindestens eine umlaufende Nut (15) mit rechteckigem Querschnitt angebracht ist.

12. Vorrichtung nach Anspruch 7, **dadurch gekennzeichnet, daß** die Hülse (9) als Glattrohr ausgebildet ist.

13. Vorrichtung nach Anspruch 7, **dadurch gekennzeichnet, daß** die Hülse (9) als quer zu seiner Längsrichtung gewelltes Rohr ausgebildet ist, das außen von einer zugfesten Schicht (13) umgeben ist.

14. Vorrichtung nach Anspruch 13, **dadurch gekennzeichnet, daß** die zugfeste Schicht (13) ein Geflecht aus Metalldrähten ist.

15. Verwendung eines mit dem Verfahren nach Anspruch 1 konfektionierten Energiekabels als Offshore-Kabel bzw. Unterwasserkabel zum Anschließen an ein auf einer Plattform einer Windkraftanlage befindliches elektrisches Gerät.
